# EUROPÄISCHE PATENTSCHRIFT

(11) **EP 1 554 590 B1**
(45) Veröffentlichungstag und Bekanntmachung des Hinweises auf die Patenterteilung: **14.01.2009**
(21) Anmeldenummer: 03750651.6
(22) Anmeldetag: 27.09.2003
(51) Int. Cl.: G01R 33/04, G01B 7/14

(54) **VORRICHTUNG MIT EINER SPULENANORDNUNG ALS MAGNETFELDSENSOR ZUR POSITIONSBESTIMMUNG**
DEVICE FOR A COIL ASSEMBLY AS MAGNETIC FIELD SENSOR FOR POSITION DETERMINATION
DISPOSITIF AVEC UN ENSEMBLE DE BOBINES SERVANT DE CAPTEUR DE CHAMP MAGNETIQUE POUR LA DETERMINATION DE POSITION

(30) Priorität: 26.10.2002 DE 10249919
(43) Veröffentlichungstag der Anmeldung: 20.07.2005
(73) Patentinhaber: FESTO AG & Co. KG, 73734 Esslingen (DE)
(72) Erfinder: KIESSLING, Albert, 71263 Weil der Stadt (DE)
(74) Vertreter: Vetter, Hans
(86) Internationale Anmeldenummer: PCT/EP2003/010786
(87) Internationale Veröffentlichungsnummer: WO 2004/038440

(56) Entgegenhaltungen:
- WO-A-93/14371
- DE-A- 3 133 048
- US-A- 3 855 525
- US-A- 4 603 295
- US-A- 4 788 498
- US-A- 4 859 942
- US-A- 5 760 577
- PATENT ABSTRACTS OF JAPAN vol. 015, no. 347 (P-1246), 3. September 1991 (1991-09-03) & JP 03 131717 A (KOMATSU LTD), 5. Juni 1991 (1991-06-05)

## Beschreibung

Die Erfindung betrifft eine Spulenanordnung bestehend aus wenigstens einer Ringkernspule, die einen geschlossenen, mit einer Spule versehenen Kern aus ferromagnetischem Material aufweist, das amorph, nanokristallin, kristallin oder ferritisch ist. Derartige, auch als Mikroringspulen bezeichnete Ringkernspulen werden in großen Stückzahlen als Drossel-, Speicher- und Übertragerspulen in Schaltnetzteilen, Mobiltelefonen und ähnlichen Anwendungen eingesetzt.

Als Magnetfeldsensoren werden üblicherweise magnetfeldresistive Sensoren, Hall-Sensoren oder Feldplatten eingesetzt, beispielsweise als Endschalter oder zur Positionserkennung eines Gegenstandes, der mit einem Permanentmagneten versehen ist. Derartige Magnetfeldsensoren sind jedoch relativ teuer. Es ist auch schon bekannt, Spulen als Endschalter oder Positionssensoren zu verwenden. Dabei wird jedoch nicht ein Magnetfeld sensiert, sondern die Spulen erzeugen selbst ein Magnetfeld oder sind an einem Permanentmagneten fixiert, wobei das Magnetfeld durch ein ferromagnetisches Teil beeinflusst und verändert wird, dessen Position erfasst werden soll. Derartige Sensoren sind ebenfalls relativ teuer und schwierig in Kleinstbauweise herzustellen.

Derartige Vorrichtungen sind beispielweise der US-A-4 603 295 und der WO 93/14371 zu entnehmen.

Eine Aufgabe der vorliegenden Erfindung besteht darin, eine als Magnetfeldsensor verwendbare Spulenanordnung zu schaffen, die in Kleinstbauweise kostengünstig realisierbar ist.

Diese Aufgabe wird erfindungsgemäß durch die Merkmale des Anspruchs 1 gelöst.

Der erfindungsgemäße Messeffekt entsteht in vorteilhafter Weise infolge der Sättigung des insbesondere amorphen Kerns durch das zu detektierende Magnetfeld, also beispielsweise durch das Magnetfeld eines Magneten an einem Gegenstand, dessen Position detektiert werden soll. Durch die Querschnittsfläche des Kerns lässt sich die Empfindlichkeit dieses Magnetfeldsensors fast beliebig an unterschiedliche Magnetfeldstärken angleichen. Bei einer Anfangspermeabilität von beispielsweise 100.000 kann die Kernpermeabilität durch ein solches Magnetfeld auf den Wert 1 reduziert werden, sodass sich sehr hohe Empfindlichkeiten des Sensors ergeben (1 : 100.000). Dadurch lassen sich mit sehr einfachen und kostengünstigen Ringkernspulen magnetische Gleichfelder detektieren. Da derartige Magnetfeldsensoren lediglich aus einem mit einer Spule versehenen Ringkern bestehen, können sie in Kleinstbauweise hergestellt werden. Ein weiterer großer Vorteil besteht darin, dass diese Magnetfeldsensoren auch an nicht-ferromagnetischen Gehäusen, beispielsweise Zylindergehäusen von fluidischen Zylindern, angebracht werden können. Normalerweise sind induktive Messprinzipien wegen der Wirbelstromverluste hierfür nicht geeignet. Durch den Ringkern und die hohe Anfangspermeabilität des Kernmaterials, insbesondere eines amorphen Kernmaterials, wird ein Austreten des magnetischen Wechselfeldes wirksam verhindert, sodass das umgebende, nicht-ferromagnetische Metallgehäuse nicht stört.

Durch die in den Unteransprüchen aufgeführten Maßnahmen sind vorteilhafte Weiterbildungen und Verbesserungen der im Anspruch 1 angegebenen Spulenanordnung möglich.

In vorteilhafter Weise ist die wenigstens eine Ringkernspule als Mikroringspule mit vorzugsweise amorphem Kern ausgebildet, dessen Länge weniger als 5 mm beträgt. Dabei besitzt der Kern bevorzugt einen kreisringförmigen Querschnitt.

Die Ansprechempfindlichkeit kann noch zusätzlich durch die Windungszahl der Spule beeinflusst bzw. eingestellt werden.

Da eine nicht-ferromagnetische Metallumgebung sich nicht störend auf die Magnetfeldmessung auswirkt, ist die Spulenanordnung hervorragend durch die Ausbildung als Positionssensor oder Positionsschalter in oder an der Zylinderwandung eines fluidischen Zylinders geeignet, vorzugsweise in einer äußeren Längsnut.

Mit einem einzigen Sensor lässt sich in der Praxis bei der Positionsmessung an einem fluidischen Zylinder eine Kolbenweglänge von ca. 25 mm erfassen. Um die gesamte Wegstrecke als Messstrecke auszubilden, sind in vorteilhafter Weise mehrere Ringkernspulen in einem RL-Netzwerk entlang dieser Messstrecke hintereinandergeschaltet, das aus einer Folge von Zweipolen besteht, deren Widerstände und/oder Induktivitäten sich von Stufe zu Stufe ändern.

Eine alternative Möglichkeit besteht darin, dass mehrere Ringkernspulen in einer Reihe entlang dieser Messstrecke angeordnet sind, wobei die Auswerteeinrichtung Mittel zur analogen oder digitalen Addition der einzelnen Spulensignale besitzt und diese insbesondere zu einem über die gesamte Messstrecke stetigen Ausgangssignal verbindet.

Die erfindungsgemäße Spulenanordnung eignet sich auch in hervorragender Weise als Endpositionsschalter, beispielsweise in wenigstens einem der beiden Abschlussdeckel eines fluidischen Zylinders zur Erfassung der Endlage oder der Endlagen des Kolbens. Hierzu genügt jeweils eine einzige Ringkernspule. Auch hier wirkt sich wiederum der Vorteil aus, dass sich der die Ringkernspule umgebende, nicht-ferromagnetische Metallwerkstoff nicht auf das Messergebnis auswirkt oder ein solches gar verhindert.

Die Auswertung der sich infolge des sich ändernden Magnetfelds ändernden Induktivität erfolgt vorzugsweise anhand an sich bekannter Messmethoden zur Erfassung einer Induktivität.

In einer bevorzugten Ausführung ist die wenigstens eine Ringkernspule in einer Brückenschaltung angeordnet, die vorzugsweise mit einem Phasendiskriminator versehen ist.

Eine weitere Auswertemöglichkeit besteht darin, dass die Spulenanordnung in einem Schwingkreis eines selbstschwingenden Oszillators angeordnet ist, wobei die aus der sich ändernden Spuleninduktivität resultierende Frequenzänderung und/oder Schwingungsamplitudenänderung das Auswertesignal bilden. In bevorzugter Weise ist der Rückkopplungsfaktor des selbstschwingenden Oszillators zum Abgleich der Ansprechempfindlichkeit einstellbar, vorzugsweise durch Laser-Trimmen eines Rückkopplungswiderstandes.

Eine weitere vorteilhafte Auswertung besteht darin, dass Mittel zur impulsförmigen Spulenerregung vorgesehen sind, wobei die Abklingzeitkonstante das Auswertesignal bildet. Weiterhin hat sich als vorteilhaft erwiesen, einen Gleichstrom zum Abgleich der Ansprechempfindlichkeit zu überlagern. Die Einstellung des Gleichstroms kann zweckmäßigerweise über einen Laser-trimmbaren Widerstand erfolgen.

Ausführungsbeispiele sind in der Zeichnung dargestellt und in der nachfolgenden Beschreibung näher erläutert. Es zeigen:
- Figur 1: eine einfache Anordnung mit einer einzigen Ringkernspule und einer schematisch dargestellten Auswerteeinrichtung,
- Figur 2: eine Anordnung mehrerer Ringkernspulen in einer Längsnut eines fluidischen Zylinders,
- Figur 3: eine erste Ausführung eines RL-Netzwerkes,
- Figur 4: eine zweite Ausführung eines RL-Netzwerkes und
- Figur 5: eine Auswerteeinrichtung mit mehreren Ringkernspulen, deren Signale additiv ausgewertet werden.

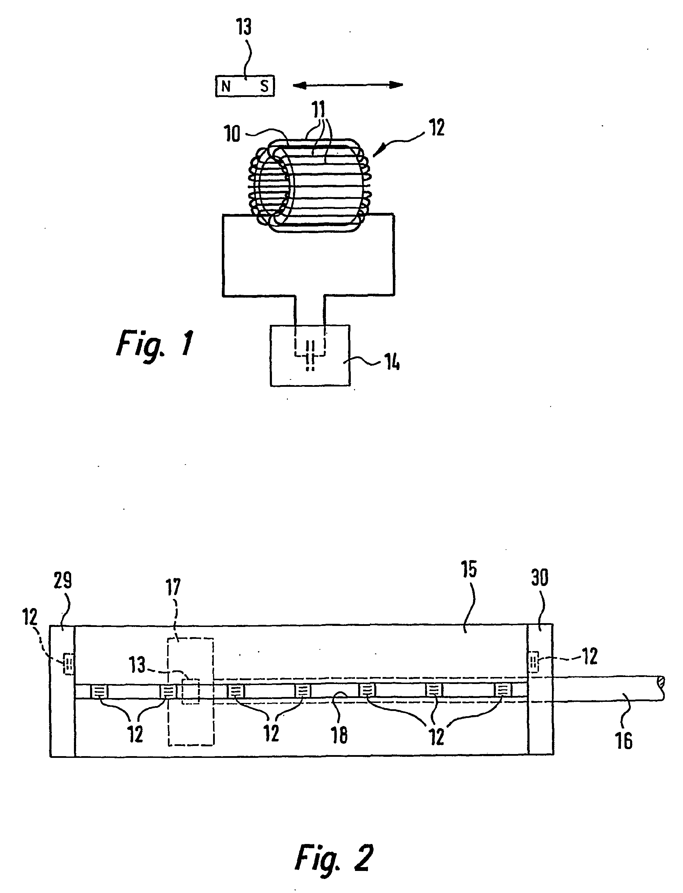

Bei dem in Figur 1 dargestellten ersten Beispiel bildet ein Ringkern 10 aus ferromagnetischem Material zusammen mit einer darauf gewickelten Wicklung bzw. Spule 11 eine Ringkernspule 12, wie sie beispielsweise als sogenannte Mikroringspule in großen Stückzahlen als Drossel-, Speicher- und Übertragerspule in Schaltnetzteilen, Mobiltelefonen und ähnlichen Anwendungen eingesetzt wird. Der Ringkern 10 besitzt einen kreisringförmigen Querschnitt, wobei auch andere geschlossene Ringkernformen möglich sind.

Diese Ringkernspule 12 ist als Magnetfeldsensor ausgebildet. Hierzu besteht der Ringkern 10 aus amorphem, nanokristallinem, kristallinem oder ferritischem Material, und die Spule 11 ist als Kupferspule ausgebildet. Der Messeffekt entsteht infolge der Sättigung des beispielsweise amorphen Kerns durch das Magnetfeld eines Magneten 13, der als Permanentmagnet oder Elektromagnet ausgebildet sein kann. Durch die Querschnittsfläche des Ringkerns 10 lässt sich die Empfindlichkeit der Ringkernspule 12 als Magnetfeldsensor fast beliebig an unterschiedliche Magnetfeldstärken angleichen. Wesentlich ist, dass der Kernquerschnitt so niedrig gewählt wird, dass das Magnetfeld des Magneten 13 nach vollständiger Sättigung des Ringkerns 10 eine Änderung der Kernpermeabilität bewirkt. Dies führt zu einer Änderung der Spuleninduktivität, welche somit ein Maß für das Magnetfeld des Magneten 13 bzw. dessen Abstand von der Ringkernspule 12 ist. Die Ringkernspule 12 kann dadurch als Positionssensor für einen Gegenstand eingesetzt werden, der mit einem Magneten 13 versehen ist und an der Ringkernspule 12 vorbeigeführt wird.

Die Auswertung erfolgt mittels einer Auswerteeinrichtung 14, die als Induktivitätsmessvorrichtung ausgebildet sein muss. Beispielsweise enthält sie einen selbstschwingenden Oszillator, in dessen Schwingkreis die Ringkernspule 12 geschaltet' ist. Durch die sich in Abhängigkeit der Position des Magneten 13 verändernde Spuleninduktivität wird die Frequenz des selbstschwingenden Oszillators und/oder die Schwingungsamplitude infolge der Erhöhung der Spulenverluste bei größer werdendem Magnetfeld verändert. Die Frequenz bzw. die Amplitude bildet dann direkt die Messgröße zur Erfassung der Magnetfeldstärkte oder des Abstands des Magneten 13 von der Ringkernspule 12 (Positionssensor).

Die Auswerteeinrichtung 14 kann auch eine Messbrücke enthalten, bei der die Ringkernspule 12 in einen Brückenzweig geschaltet ist. Bei einer solchen Wechselspannungs-Messbrücke dient dann ein Phasendiskriminator zur Erfassung der Messgröße.

Eine weitere Möglichkeit besteht darin, dass in der Auswerteeinrichtung 14 Mittel zur impulsförmigen Spulenerregung der Ringkernspule 12 enthalten sind. Dabei wird die Abklingzeitkonstante zur Erfassung der Messgröße ermittelt. Dieses Auswerteverfahren eignet sich insbesondere für die Auswertung mit einem Mikroprozessor.

Die Ansprechempfindlichkeit des Sensors kann auch durch die Wicklungszahl der Spule 11 oder durch Überlagerung mit einem einstellbaren Gleichstrom eingestellt werden. Die Einstellung dieses Gleichstroms in der Auswerteeinrichtung erfolgt beispielsweise über einen Laser-trimmbaren Widerstand. Ein solcher Laser-trimmbarer Widerstand kann auch als Rückkopplungwiderstand in einem selbstschwingenden Oszillator vorgesehen sein, wobei die Ansprechempfindlichkeit durch Veränderung des Rückkopplungsfaktors eingestellt werden kann.

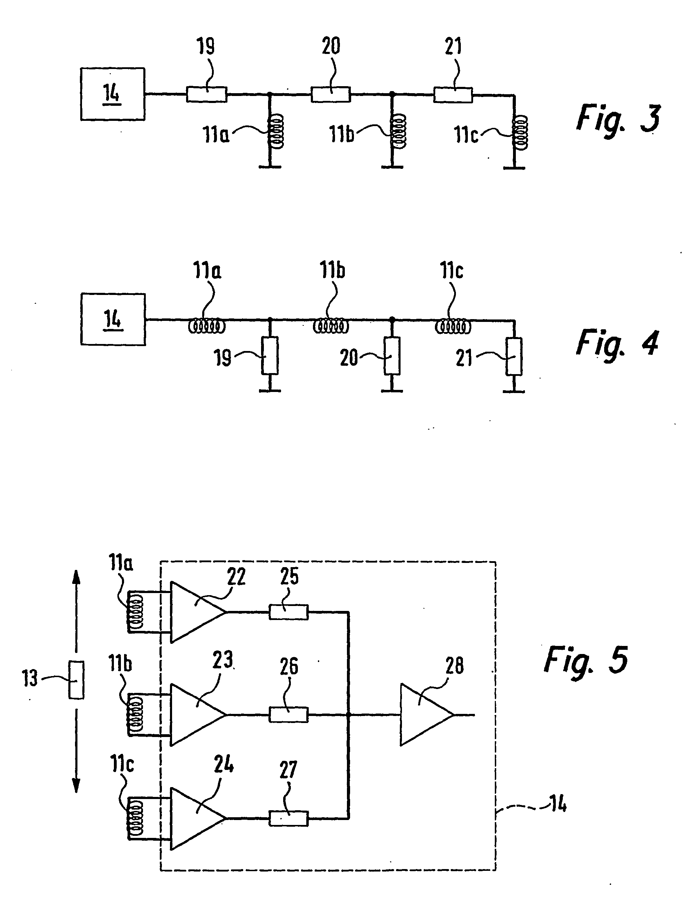

In Figur 2 ist ein fluidischer Zylinder 15 schematisch dargestellt, in dem ein mit einer Kolbenstange 16 versehener Kolben 17 verschiebbar geführt ist. Zur Positionserkennung des Kolbens 17 ist dieser mit dem Magneten 13 versehen, und in einer Zylinder-Längsnut 18 an der Außenseite des Zylinders 15 sind mehrere Ringkernspulen 12 beabstandet voneinander aufgereiht. Mit einer einzigen Ringkernspule 12 lässt sich in der Praxis eine Weglänge von ca. 25 mm erfassen, sodass entsprechend der Länge des Zylinders 15 mehrere Ringkernspulen 12 erforderlich sind, um die Position des Kolbens 17 über die gesamte Messstrecke zu erfassen. Die Ringkernspulen sind hierzu gemäß einer der Figuren 3 bis 5 geschaltet. Gemäß den Figuren 3 und 4 sind sie in einem RL-Netzwerk angeordnet. Dieses besteht aus hintereinandergeschalteten Zweipolen, von denen jeder aus einem Widerstand 19 - 21 und einer Spule 11a - 11c besteht. Dabei sind entweder gemäß Figur 3 die Widerstände 19 - 21 in Reihe oder gemäß Figur 4 die Spulen 11a - 11c in Reihe geschaltet. Zur Positionserfassung ändern sich entweder die Widerstände 19 - 21 und/oder die Induktivitäten der Spulen 11a - 11c von Stufe zu Stufe. Die Induktivitätsänderung erfolgt hier vornehmlich durch Variation der Drahtwindungszahl. Die Auswertung erfolgt beispielsweise gemäß einer der vorstehend beschriebenen Methoden.

Bei der in Figur 5 dargestellten Methode werden in der Auswerteeinrichtung 14 die durch Verstärker 22 - 24 verstärkten Sensorsignale der Spulen 11a - 11c für ein aus Widerständen 25 - 27 bestehendes Addier-Netzwerk addiert und mittels einer Signalaufbereitungseinrichtung 28 als Messgröße aufgearbeitet. Man erhält hierdurch ein über die gesamte Messstrecke stetiges Ausgangssignal. Anstelle der analogen Addition kann selbstverständlich auch eine digitale Addition treten. Anstelle unterschiedlicher Induktivitäten können auch die Verstärkungsfaktoren der Verstärker 22 - 24 oder die Widerstände 25 - 27 stufenweise ansteigen.

Derartige Ringkernspulen 12 können auch als Endschalter zur Erfassung der Endpositionen beispielsweise des Kolbens 17 dienen. Hierzu ist in jedem Zylinderdeckel 29, 30 des Zylinders 15 eine Ringkernspule 12 eingelassen. Bei sich annäherndem Kolben 17 erfolgt in der beschriebenen Weise eine Induktivitätsänderung, wobei die Unterschreitung eines vorgebbaren Schwellwerts zur Endlagenerkennung dient.

## Patentansprüche

1. Vorrichtung mit einer Spulenanordnung als Magnetfeldsensor bestehend aus wenigstens einer Ringkernspule (12), die einen geschlossenen, mit einer Spule (11) versehenen Kern (10) aus ferromagnetischem Material aufweist, das amorph, nanokristallin, kristallin oder ferritisch ist, mit einem in einer Relativbewegung vorbeibewegbaren Magneten (13), wobei der Kernquerschnitt des Kerns (10) so gering dimensioniert ist, dass das zu detektierende Magnetfeld des vorbeibewegbaren Magneten (13) eine Änderung der Kernpermeabilität bewirkt, und mit einer Auswerteeinrichtung (14) zur Erfassung der sich infolge der Änderung der Kernpermeabilität ändernden Spuleninduktivität wobei mehrere Ringkernspulen (12) in einer Reihe entlang einer Messstrecke angeordnet sind, **gekennzeichnet durch** die Ausbildung als Positionssensoranordnung oder Positionsschalteranordnung in einer Längsnut (18) an der Zylinderwandung eines fluidischen Zylinders (15) zur Erfassung der Position eines Kolbens (17) und wobei jeder Kern (10) nur eine spule (11) trägt.

2. Vorrichtung nach Anspruch 1, **dadurch gekennzeichnet, dass** die wenigstens eine Ringkernspule (12) als Mikroringspule mit vorzugsweise amorphem Kern (10) ausgebildet ist, dessen Länge weniger als 5 mm beträgt.

3. Vorrichtung nach Anspruch 1 oder 2, **dadurch gekennzeichnet, dass** die Ansprechempfindlichkeit durch die Windungszahl der Spule (11) festlegbar ist.

4. Vorrichtung nach einem der vorhergehenden Ansprüche, **dadurch gekennzeichnet, dass** der wenigstens eine Kern (10) einen kreisringförmigen Querschnitt besitzt.

5. Vorrichtung nach einem der vorhergehenden Ansprüche, **dadurch gekennzeichnet, dass** die Ringkernspulen (12) in einem RL-Netzwerk entlang der Messstrecke hintereinandergeschaltet sind, das aus einer Folge von Zweipolen besteht, deren Widerstände (25 - 27) und/oder Induktivitäten (11a - 11c) sich von Stufe zu Stufe ändern.

6. Vorrichtung nach einem der Ansprüche 1 bis 4, **dadurch gekennzeichnet, dass** die Auswerteeinrichtung Mittel (25 - 27) zur analogen oder digitalen Addition der einzelnen Spulensignale besitzt und diese insbesondere zu einem über die gesamte Messstrecke stetigen Ausgangssignal verbindet.

7. Vorrichtung nach einem der vorhergehenden Ansprüche, **dadurch gekennzeichnet, dass** wenigstens eine Ringkernspule (12) in einer Brückenschaltung angeordnet ist, die vorzugsweise mit einem Phasendiskriminator versehen ist.

8. Vorrichtung nach einem der Ansprüche 1 bis 6, **dadurch gekennzeichnet, dass** sie im Schwingkreis eines selbstschwingenden Oszillators angeordnet ist, wobei die aus der sich ändernden Spuleninduktivität resultierende Frequenzänderung und/oder Schwingungsamplitudenänderung die Messgröße bildet.

9. Vorrichtung nach Anspruch 8, **dadurch gekennzeichnet, dass** der Rückkopplungsfaktor des selbstschwingenden Oszillators zum Abgleich der Ansprechempfindlichkeit einstellbar ist, vorzugsweise durch Laser-Trimmen eines Rückkopplungswiderstandes.

10. Vorrichtung nach einem der Ansprüche 1 bis 6, **dadurch gekennzeichnet, dass** Mittel zur impulsförmigen Spulenerregung vorgesehen sind, wobei die Abklingzeitkonstante die Messgröße bildet.

11. Vorrichtung nach einem der vorhergehenden Ansprüche, **dadurch gekennzeichnet, dass** ihr ein Gleichstrom zum Abgleich der Ansprechempfindlichkeit überlagerbar ist.

12. Vorrichtung nach Anspruch 11, **dadurch gekennzeichnet, dass** zur Einstellung des Gleichstroms ein Laser-trimmbarer Widerstand vorgesehen ist.

## Claims

1. Device with a coil arrangement acting as a magnetic field sensor, comprising at least one toroidal core coil (12) having a closed core (10) made of an amorphous, nanocrystalline, crystalline or ferritic ferromagnetic material and provided with a coil (11), further comprising a magnet (13) capable of passing in a relative movement, the core cross-section of the core (10) being dimensioned so small that the magnetic field of the passing magnet (13) effects a change in core permeability, and further comprising an evaluation unit (14) for the detection of the changes in coil inductance due to the changes in core permeability, wherein a plurality of toroidal core coils (12) is arranged in a row along a measuring section, **characterised by** being designed as a position sensor or position switch arrangement in a longitudinal groove (18) in the wall of a fluid power cylinder (15) for the detection of the position of a piston (17), each core (10) supporting only one coil (11).

2. Device according to claim 1, **characterised in that** the at least one toroidal core coil (12) is designed as a micro-toroidal coil, preferably with an amorphous core (10) with a length of less than 5 mm.

3. Device according to claim 1 or 2, **characterised in that** the sensitivity can be determined by the number of windings of the coil (11).

4. Device according to any of the preceding claims, **characterised in that** the at least one core (10) has an annular cross-section.

5. Device according to any of the preceding claims, **characterised in that** the toroidal core coils (12) are connected in series along the measuring section in an RL network which comprises a series of two-terminal elements, the resistances (25 - 27) and/or inductances (11 a - 11 c) of which change from stage to stage.

6. Device according to any of claims 1 to 4, **characterised in that** the evaluation unit (25 - 27) is provided with means for the analogue or digital addition of the individual coil signals and in particular combines these to provide an output signal which is continuous along the entire measuring section.

7. Device according to any of the preceding claims, **characterised in that** at least one toroidal core coil (12) is located in a bridge circuit which is preferably provided with a phase detector.

8. Device according to any of claims 1 to 6, **characterised in that** it is located in the resonant circuit of a self-oscillatory oscillator, the frequency change and/or oscillation amplitude change caused by the change in coil inductance representing the measured variable.

9. Device according to claim 8, **characterised in that** the feedback factor of the self-oscillating oscillator is adjustable for sensitivity adjustment, preferably by the laser trimming of a feedback resistor.

10. Device according to any of claims 1 to 6, **characterised in that** means for pulse-shaped coil excitation are provided, the decay time constant representing the measured variable.

11. Device according to any of the preceding claims, **characterised in that** a direct current can be superimposed on it for sensitivity adjustment.

12. Device according to claim 11, **characterised in that** a laser-trimmable resistor is provided for the adjustment of the direct current.

## Revendications

1. Dispositif comprenant un agencement de bobines en tant que capteur de champ magnétique, constitué d'au moins une bobine toroïdale (12), laquelle présente un noyau fermé (10) doté d'une bobine (11) et constitué d'un matériau ferromagnétique amorphe, nanocristallin, cristallin ou ferritique, avec un aimant (13) pouvant être déplacé devant lui selon un mouvement relatif, la section de noyau du noyau (10) étant dimensionnée de manière si petite que le champ magnétique à détecter de l'aimant pouvant être déplacé devant lui (13) entraîne une modification de la perméabilité du noyau, et avec un dispositif d'exploitation (14) pour enregistrer l'inductance de bobine modifiée suite à la modification de la perméabilité de noyau, plusieurs bobines toroïdales (12) étant disposées en ligne le long d'un trajet de mesure, **caractérisé par** la réalisation en tant qu'agencement de capteur de position ou agencement de commutateur de position dans une rainure longitudinale (18) sur la paroi de cylindre d'un cylindre fluidique (15) pour enregistrer la position d'un piston (17) et chaque noyau (10) ne portant qu'une seule bobine (11).

2. Dispositif selon la revendication 1, **caractérisé en ce qu'**au moins une bobine toroïdale (12) est formée en tant que microbobine toroïdale ayant de préférence un noyau amorphe (10), dont la longueur est inférieure à 5 mm.

3. Dispositif selon la revendication 1 ou 2, **caractérisé en ce que** le seuil de déclenchement peut être déterminé par le nombre de spires de la bobine (11).

4. Dispositif selon l'une des revendications précédentes, **caractérisé en ce que** le au moins un noyau (10) comporte une section transversale de forme annulaire.

5. Dispositif selon l'une des revendications précédentes, **caractérisé en ce que** les bobines toroïdales (12) sont branchées les unes à la suite des autres dans un réseau RL le long du trajet de mesure, lequel réseau RL est constitué d'une série de dipôles dont les résistances (25 à 27) et/ou inductances (11a à 11 c) sont modifiées d'étage en étage.

6. Dispositif selon l'une des revendications 1 à 4, **caractérisé en ce que** le dispositif d'exploitation comprend des moyens (25 à 27) pour l'addition analogique ou numérique des signaux des différentes bobines et qui relie ceux-ci en particulier en un signal de sortie continu sur tout le trajet de mesure.

7. Dispositif selon l'une des revendications précédentes, **caractérisé en ce qu'**au moins une bobine toroïdale (12) est disposée dans un circuit en pont, lequel est de préférence doté d'un démodulateur de phase.

8. Dispositif selon l'une des revendications 1 à 6, **caractérisé en ce qu'**il est placé dans le circuit oscillant d'un oscillateur autohétérodyne, la modification de fréquence et/ou modification de l'amplitude d'oscillation résultant de l'inductance de bobine modifiée étant la grandeur de mesure.

9. Dispositif selon la revendication 8, **caractérisé en ce que** le taux de réaction de l'oscillateur autohétérodyne peut être ajusté pour régler le seuil de déclenchement, de préférence par réglage au laser d'une résistance de rétroaction.

10. Dispositif selon l'une des revendications 1 à 6, **caractérisé en ce que** des moyens sont prévus pour l'excitation de bobine par impulsions, la constante de temps de relâchement étant la grandeur de mesure.

11. Dispositif selon l'une des revendications précédentes, **caractérisé en ce qu'**un courant continu pour ajuster le seuil de déclenchement peut lui être superposé.

12. Dispositif selon la revendication 11, **caractérisé en ce qu'**une résistance pouvant être ajustée au laser est prévue pour ajuster le courant continu.
